(19) Europäisches Patentamt
European Patent Office
Office européen des brevets

(11) EP 0 779 256 B1

(12) **FASCICULE DE BREVET EUROPEEN**

(45) Date de publication et mention de la délivrance du brevet:
**09.04.2003 Bulletin 2003/15**

(51) Int Cl.[7]: **C04B 22/14**, C04B 22/00, C04B 28/08, C09K 17/10, C09K 17/08

(21) Numéro de dépôt: **96402683.5**

(22) Date de dépôt: **10.12.1996**

(54) **Accélérateur de gélification, coulis d'injection le contenant, son utilisation**

Gelierungsbeschleuniger, einen diesen beinhaltenden Injektionsschlamm und dessen Verwendung

Gelation accelerator, injection grout containing it and its use

(84) Etats contractants désignés:
**BE DE ES FR GB NL**

(30) Priorité: **15.12.1995 FR 9514932**

(43) Date de publication de la demande:
**18.06.1997 Bulletin 1997/25**

(73) Titulaire: **Spie Fondations**
**95863 Cergy Pontoise (FR)**

(72) Inventeur: **Devic-Bassaget, Lucien Boris**
**75009 Paris (FR)**

(74) Mandataire: **Derambure, Christian et al**
**Bouju Derambure Bugnion,**
**52, rue de Monceau**
**75008 Paris (FR)**

(56) Documents cités:

| | |
|---|---|
| **EP-A- 0 434 274** | **EP-A- 0 657 398** |
| **BO-A- 432 851** | **FR-A- 2 635 320** |
| **GB-A- 2 279 979** | **GB-A- 2 284 841** |
| **US-A- 4 190 454** | |

- **CHEMICAL ABSTRACTS, vol. 125, no. 2, 8 Juillet 1996 Columbus, Ohio, US; abstract no. 17414, MIWA MOTOMU & AL.: "Hardening agent for soil-injection grout" XP002026074 & JP 08 073 846 A (ASAHI DENKA KOGYO KK) 19 Mars 1996**
- **DATABASE WPI Section Ch, Week 8108 Derwent Publications Ltd., London, GB; Class L02, AN 81-12513D XP002026076 "Soil solidification by injection of gelating grout of water glass, organic acid and alkaline gelation control agent" & JP 55 160 081 A (KYOKADO ENG KK) , 13 Décembre 1980**
- **CHEMICAL ABSTRACTS, vol. 100, no. 10, 5 Mars 1984 Columbus, Ohio, US; abstract no. 73098, "Method of stabilizing soil" XP002026075 & JP 58 132 077 A (SEKISUI CHEMICAL CO., LTD.) 6 Août 1983**
- **CHEMICAL ABSTRACTS, vol. 109, no. 16, 17 Octobre 1988 Columbus, Ohio, US; abstract no. 134093k, KAWAMURA KUNIMOTO: "Setting acceleration of mortar and concrete with addition of aluminum sulfate" XP000158460 & JP 63 107 850 A (MITSUI CONSTRUCTIN CO.) 12 Mai 1988**
- **CHEMICAL ABSTRACTS, vol. 115, no. 12, 23 Septembre 1991 Columbus, Ohio, US; abstract no. 119200, IWASAKI MASHIRO & AL.: "Rapid-hardening grouting material and cement compostions for grouting" XP002013020 & JP 03 088 755 A (DENKI KAGAKU KOGYO K.K.) 15 Avril 1991**
- **CHEMICAL ABSTRACTS, vol. 121, no. 2, 11 Juillet 1994 Columbus, Ohio, US; abstract no. 16526, HIRANO KENKICHI & AL: "Cement admixtures for grouting and grouting materials using them" XP002012948 & JP 06 072 747 A (DENKI KAGAKU KOGYO K. K.) 15 Mars 1994**
- **DATABASE WPI Section Ch, Week 8146 Derwent Publications Ltd., London, GB; Class E14, AN 81-84268D XP002012976 & JP 56 125 257 A (DENKI KAGAKU KOGYO CO) , 1 Octobre 1981**
- **CHEMICAL ABSTRACTS, vol. 112, no. 26, 25 Juin 1990 Columbus, Ohio, US; abstract no. 239706, HIRANO KENKICHI & AL.: "Rapid-setting agents for sprayable cement mortar and concrete" XP002012947 & JP 02 038 350 A (DENKI KAGAKU KOGYO K. K.) 7 Février 1990**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

- **CHEMICAL ABSTRACTS, vol. 113, no. 8, 20 Août 1990 Columbus, Ohio, US; abstract no. 64313, YAGI TORU & AL.: "Cement set accelerating agent" XP002012975 & JP 02 083 245 A (DENKI KAGAKU KOGYO K.K.) 23 Mars 1990**
- **CHEMICAL ABSTRACTS, vol. 110, no. 2, 9 Janvier 1989 Columbus, Ohio, US; abstract no. 12627, KIKUCHI MASATSUME & AL.: "Accelerators for cement setting" XP002012949 & JP 63 206 341 A (ONAND CEMENT CO.) 25 Août 1988**

## Description

L'invention concerne tout d'abord un accélérateur de gélification pour l'étanchéification et/ou la consolidation des sols et masses poreux, des roches fissurées et des matériaux de construction altérés tels que maçonnerie, mortiers, béton, etc.

L'invention concerne encore un coulis d'injection pour l'étanchéification et/ou la consolidation de sols et de matériaux de construction comprenant un tel accélérateur.

L'invention concerne encore un procédé de mise en oeuvre d'un tel coulis d'injection en vue d'améliorer l'étanchéité et/ou de consolider de tels sols et matériaux de construction.

Enfin, l'invention concerne également un procédé de traitement des sols pollués permettant de piéger en masse divers éléments polluants, les rendant inaccessibles aux eaux souterraines. Ces éléments peuvent être d'origine organique tels que les hydrocarbures, ou d'origine minérale, tels que notamment certains métaux lourds comme le plomb, le cadmium, le mercure, le césium, etc.

Il est connu d'utiliser pour étanchéifier et/ou consolider les sols et matériaux des compositions connues sous le nom de "coulis". Ces coulis peuvent être à base de ciment ou de silicate.

L'utilisation de coulis constitués d'eau et de fines particules de ciment à base de laitier de haut fourneau, parfaitement défloculé, soit mécaniquement, soit par l'utilisation d'un adjuvant non polluant, présente comme principaux inconvénients un temps de gélification trop long et une forte décantation à des rapports ciment/eau peu élevés, malgré de bonnes caractéristiques de pénétrabilité dans les sols fins. Ceci se traduit par des phénomènes de migration par gravité, car la rigidité obtenue par une gélification du coulis n'intervient qu'au bout de plus de quinze heures et n'étanche que faiblement le sol, la décantation étant trop importante pour remplir convenablement les pores du sol.

Ce temps de gélification qui fait suite à l'état sensiblement liquide du coulis est lui-même suivi par la prise à proprement parler du coulis. La prise en elle-même commence généralement après un temps correspondant à deux ou trois fois le temps nécessaire pour que la gélification du coulis débute. La prise du coulis est suivie par le durcissement du coulis.

En outre, l'évolution de la réglementation en matière d'environnement a pour conséquence une diminution croissante de l'utilisation de matières polluantes affectant la qualité des eaux, telles que les coulis à base de silicates de soude et de réactifs minéraux et/ou organiques, dont la rigidification est basée sur la gélification de la silice.

Soumis à des phénomènes de synérèse, à savoir une auto-contraction de la silice non cristallisée, ce type de produit libère des matières pouvant provoquer la pollution des sols. Des exemples de coulis à base de silicate peuvent être trouvés dans les documents FR-A-2 571 734, FR-A-2 629 495, EP-A-0 487 414.

On connaît également des activateurs de la prise de béton ou de mortier, comportant un composé alumineux (document US-4 190 454, JP-A-3 088 755, JP-A-56 125 257, FR-A-2 635 320).

Ces activateurs agissent cependant sur la prise en elle-même du béton ou du ciment, et non pas sur la gélification du produit.

Les bétons ou mortiers ainsi activés, qu'ils soient utilisés par voie de coffrage ou par "injection-projection", possèdent un seuil d'écoulement de l'ordre de quelques centaines de Pascals en une période de quelques minutes. Le matériau est alors figé et la prise réelle et définitive du mortier ou du béton activé est obtenu en une heure environ.

Ces matériaux activés possèdent de plus des viscosités très élevées, de l'ordre de $10^3$ à $10^6$ mPa.s selon la formulation et la configuration des plastifiants.

Un premier objet de l'invention est donc de proposer un accélérateur de gélification spécialement adapté pour les coulis d'injection, pour l'étanchéification et/ou la consolidation de sols et de matériaux de construction, qui pallie les limites ou les inconvénients des produits connus de l'état de la technique.

Un autre objet de la présente invention est de proposer un coulis d'injection comportant un tel accélérateur, ayant pour effet d'augmenter la rigidité de la suspension de particules de ciment de laitier, de façon différée dans le temps. Plus particulièrement, un objet de la présente invention est de proposer un coulis d'injection ayant pour caractéristique un seuil d'écoulement suffisamment faible pendant la durée de l'injection pour assurer une pénétrabilité optimale et un seuil d'écoulement suffisamment élevé en fin d'injection pour s'opposer aux forces de gravité et à la décantation.

Un autre objet de la présente invention est de proposer un coulis d'injection pour l'étanchéification et/ou la consolidation de matières poreuses fines, voire très fines, dont le durcissement est assuré par cristallisation de matières minérales provenant de l'industrie cimentière et de ses dérivés, parfaitement pérennes, non polluantes et sans synérèse, ayant de plus des temps de prise constants et réglables.

Un autre objet de la présente invention est de proposer un tel coulis qui présente comme avantage de rester dans la zone traitée, d'assurer une parfaite étanchéité et d'apporter de bonnes caractéristiques mécaniques, et ce, dès quelques jours.

A cet effet, l'invention propose tout d'abord l'utilisation d'un accélérateur de gélification spécialement adapté pour les suspensions aqueuses de coulis d'injection, pour l'étanchéification et/ou la consolidation de sols et de matériaux de construction, caractérisé en ce qu'il comprend au moins un composé alumineux.

Selon l'invention, l'accélérateur ne participe pas directement à la prise de coulis mais agit comme catalyseur dans la gélification.

Cet accélérateur a une teneur en alumine $Al_2O_3$ comprise entre environ 8 % et environ 50 % en poids de matière sèche.

Dans le cadre de la présente demande de brevet, on entend par matière sèche, le ciment et la ou les charges minérales.

Selon un autre aspect, l'invention propose un coulis d'injection pour l'étanchéification et/ou la consolidation de sols et matériaux de construction, caractérisé en ce qu'il comprend au moins un accélérateur de gélification selon l'invention.

Plus particulièrement, un tel coulis comprend une suspension aqueuse de ciment de laitier de haut fourneau au clinker et un accélérateur de gélification conforme à l'invention.

Avantageusement, le coulis de l'invention comprend finalement d'environ 0,1 % en poids à environ 2% en poids d'alumine soluble par rapport au poids de ciment.

L'invention propose encore un procédé d'étanchéification et/ou de consolidation de sols et de matériaux de construction, caractérisé en ce qu'il consiste à injecter un coulis d'injection conforme à l'invention.

Enfin, la présente invention concerne un procédé de traitement des sols pollués, caractérisé en ce qu'on utilise, pour piéger en masse les éléments polluants, un coulis conforme à la présente invention.

D'autres caractéristiques et avantages de la présente invention apparaîtront clairement à la lecture de la description qui suit faite en référence aux dessins annexés dans lesquels :

- la figure 1 est un graphe illustrant l'influence d'un accélérateur conforme à la présente invention sur l'évolution de la rigidité obtenue par gélification d'un coulis ;
- la figure 2 est un graphe illustrant l'influence d'un accélérateur conforme à la présente invention sur le phénomène de la décantation d'un coulis.

Un coulis d'injection pour l'étanchéification et/ou la consolidation de sols et de matériaux de construction comprend tout d'abord une suspension aqueuse de ciment de laitier de haut fourneau au clinker.

La proportion d'eau dans le coulis est comprise entre 100 et 1.000 litres d'eau par $m^3$ de coulis.

Le ciment de laitier type CLK comprend plus de 50 % de laitier et plus de 10 % de clinker. Dans un mode de réalisation préféré, le ciment comprend plus de 80 % en poids de laitier, 16 % en poids environ de clinker et 4 % en poids de gypse, dont la composition chimique est comprise dans les limites suivantes :

CaO=40 à 50 % ; $SiO_2$=26 à 32 % ; $Al_2O_3$=9 à 20 %.

La finesse du ciment est importante : la surface spécifique Blaine doit être supérieure à 8.000 $cm^2/g$, soit un diamètre des plus gros grains de ciment de 12 µm, et pour traiter les terrains très fins, la surface spécifique Blaine doit être supérieure à 10.000 $cm^2/g$, soit un diamètre des plus gros grains de ciment de 10 µm. Certains traitements des suspensions peuvent amener à utiliser des granulométries inférieures à 5 ou 6 µm. Dans tous les cas, la granulométrie du ciment de laitier de clinker doit être inférieure à environ 120 µm.

Dans un exemple de coulis d'injection, le ciment de laitier a une granulométrie comprise entre environ 0,5 µm et environ 15 µm.

La proportion de ciment dans le coulis d'injection est comprise entre environ 50 et environ 350 kg de ciment par $m^3$.

Une charge minérale peut être ajoutée à la suspension afin de régler les résistances en compression simple du coulis et les caractéristiques rhéologiques de la suspension. Ces charges peuvent être de fines particules de carbonate de calcium, précipité ou calcite micronisée ; ou de fines particules de carbonate double de calcium et de magnésium (dolomite). Le choix de ces charges, utilisées isolément ou en combinaison, dépend de l' acidité de l'accélérateur de gélification utilisé. La proportion de la charge dans le coulis peut aller jusqu'à environ 500 $kg/m^3$.

Le coulis d'injection peut comprendre encore un agent superplastifiant et défloculant des particules en suspension dans l'eau dans une proportion allant d'environ 1 à environ 4 % du poids de la matière sèche de la suspension.

Enfin, le coulis comprend un accélérateur constitué d'un composé alumineux, liquide ou granulaire, ayant une teneur en alumine $Al_2O_3$ comprise entre 8 % et 50 % en poids de matière sèche.

Cet accélérateur de gélification peut être obtenu selon plusieurs procédés, et notamment à partir de sulfate d'aluminium $Al_2(SO_4)_3$, $nH_2O$.

Selon un premier procédé, l'accélérateur de gélification est obtenu à partir d'aluminate de calcium anhydre, obtenu après transformation de produits alumineux de l'industrie cimentière par mise en solution aqueuse. L'aluminate de calcium anhydre a un rapport $Al_2O_3$/CaO supérieur à 0,2 et de préférence compris entre 0,8 et 1,2. La faible solubilité de l'aluminate de calcium impose d'utiliser l'accélérateur ainsi obtenu dans une proportion allant jusqu'à environ 800 l de solution par $m^3$ de coulis. Dans un mode de réalisation préféré, la quantité d'accélérateur de gélification présent

dans le coulis d'injection est comprise entre environ 500 et environ 600 l/$m^3$ de coulis.

Selon un deuxième procédé, l'accélérateur de gélification est obtenu à partir d'une solution de sulfate d'aluminium $Al_2(SO_4)_3$, $nH_2O$, dosé jusqu'à environ 15 % en poids par rapport au poids de ciment. De préférence, la solution de sulfate d'aluminium contient 8 % en poids de $Al_2O_3$, le dosage étant préférentiellement compris entre environ 5 % et environ 7 % en poids par rapport au poids du ciment.

Selon un troisième procédé, l'accélérateur de gélification est obtenu à partir d'une solution d'aluminate de calcium sulfaté, obtenu par mélange d'une solution de sulfate d'aluminium et d'un composé contenant du calcium, tel que : la chaux vive CaO, la chaux éteinte ou portlandite $Ca(OH)_2$, le sulfate de calcium à divers degrés d'hydratation : $CaSO_4$, $nH_2O$, $O<n<2$ (gypse, anhydrite, plâtre, etc.).

La proportion de l'accélérateur de gélification dans le coulis lorsqu'il est obtenu à partir de ce procédé est de l'ordre de celle du premier procédé décrit ci-dessus.

Selon un quatrième procédé, l'accélérateur de gélification est obtenu à partir d'une solution d'alun de potassium : sulfate double d'aluminium et de potassium, $Al\,K(SO_4)_2$, $nH_2O$ ou de phosphate d'alumine $AlPO_4$, $nH_2O$. Dans ce cas, la proportion d'accélérateur de gélification dans le coulis est de l'ordre de celle décrite dans le deuxième procédé mentionné ci-dessus.

En d'autres termes, le coulis d'injection comprend jusqu'à environ 800 1, et de préférence entre environ 500 et environ 600 l d'accélérateur de gélification par $m^3$ de coulis lorsque l'accélérateur est obtenu à partir d'aluminate de calcium ou à partir d'aluminate de calcium sulfaté.

Le coulis d'injection comprend une quantité d'accélérateur de gélification allant jusqu'à environ 15 %, et de préférence entre environ 5 % et environ 7 % en poids par rapport au poids de ciment, lorsque l'accélérateur est obtenu à partir de sulfate d'aluminium ou à partir de sulfate double d'aluminium et de potassium.

Sur la figure 1, qui représente l'influence de l'accélérateur sur l'évolution de la rigidité obtenue par gélification du coulis en fonction du temps, la courbe obtenue en reliant les points en forme de losange correspond à un coulis sans accélérateur, alors que la courbe obtenue en reliant les points en forme de carré correspond à un coulis comprenant 500 l/$m^3$ d'accélérateur de gélification obtenu à partir d'aluminate de calcium (premier procédé décrit ci-dessus).

Sur la figure 2, qui représente l'influence d'un accélérateur conforme à l'invention sur la décantation d'un coulis en fonction du temps, la courbe obtenue en reliant les points en forme de triangle correspond à un coulis sans accélérateur, la courbe obtenue en reliant les points en forme de carré correspond à un coulis comprenant 500 l/$m^3$ d'accélérateur obtenu à partir d'aluminate de calcium (premier procédé décrit ci-dessus), avec une agitation de 10 mn ; et la courbe obtenue en reliant les points en forme de losange correspond à un coulis comprenant 500 l/$m^3$ d'accélérateur obtenu à partir d'aluminate de calcium (selon le premier procédé décrit ci-dessus), avec une agitation de 1 h.

Dans la description qui suit, les lettre S, C, A, $\bar{S}$, H ont la signification suivante :

$S=SiO_2$ ; $C=C_aO$ ; $A=Al_2O_3$ ; $\bar{S}=SO_3$ ; $H=H_2O$

Le mécanisme de rigidification du produit d'injection selon l'invention ne fait pas appel à la formation de silicates de calcium hydratés appelés couramment "CSH".

En effet, le coulis d'injection selon l'invention n'utilise pas de silicate de soude ou de fumée de silice amorphe lentement dissoute dans la soude, mais un accélérateur alumineux agissant de la manière suivante : le ciment de laitier est mis en solution dans l'eau. Le gypse ou l'anhydrite qu'il contient réagit avec les aluminates les plus solubles du ciment à savoir les aluminates tricalciques ou $C_3A$ pour former de l'ettringite dite primaire, peu soluble, formant une coquille imperméabilisant la surface du minéral.

La réaction s'écrit :

$$C_3A + 3(C\bar{S},nH) + (32-3n)H \text{ ---> } C_6A\bar{S}_3H_{32}$$

ou

$$C_3A + (C\bar{S},nH) + (12-n)H \text{ ---> } C_4A\bar{S}H_{12}$$

Ceci a pour effet de ralentir la prise et de maîtriser la granulométrie du ciment. Sous cette forme et sans accélérateur, le ciment fait prise en plus de 15 heures et doit décanter pour augmenter sa rigidité. Pour mémoire, un coulis dosé à 200 kg/$m^3$ a une décantation de 70 % environ. L'accélérateur selon l'invention permet à la suspension de ciment de retrouver en solution des aluminates, jusqu'alors précipités sous forme d'ettringite, en proportion suffisante pour réagir sur la fraction de clinker la plus soluble à court terme à savoir les silicates tricalciques ou $C_3S$ libérant de la chaux en s'hydratant selon la réaction :

$$C_3S + (h+3-x)\ H_2O \text{ ---> } C_xSH_y + (3-x)\ CH$$
tobermorite + chaux

Ensuite, les aluminates de l'accélérateur selon l'invention vont se combiner, dans la phase aqueuse, avec la chaux libérée selon les réactions suivantes :

- lorsque l'accélérateur est obtenu selon le premier procédé décrit ci-dessus :

$$C + A \text{ ---> } CA$$

$$CA + 10H \text{ ---> } CAH_{10} \text{ hexagonal}$$

ou

$$4\ CA+21H \text{ ---> } C_4AH_{12} \text{ hexagonal}+3AH_3 \text{ (gibbsite)}$$

$$2\ CA+10\ H \text{ ---> } C_2AH_7+AH_3$$

- lorsque l'accélérateur est obtenu selon les deuxième, troisième et quatrième procédés décrits ci-dessus : la présence d'ions sulfates permet la cristallisation, avec la chaux et l'alumine, d'ettringite :

$$A_2\bar{S}_3{,}nH_2O + H_2O \text{ ---> } 3\ A_{aq} + 2\bar{S}_{aq}$$

se combinant à la chaux pour donner $C_6A\bar{S}H_{32}$ et $C_4A\bar{S}H_{12}$.

Dans tous les cas, le fluide véhiculant -l'eau- se charge en cristaux de formes diverses dont certains peuvent fusionner et/ou s'entrecroiser, dans le fluide et à la surface des grains de ciment, armant la suspension en lui conférant une rigidité progressive.

Plus particulièrement, lorsque l'accélérateur est obtenu à partir d'aluminate de calcium (selon le premier procédé décrit ci-dessus), l'apparition dans la phase aqueuse de molécules hexagonales fortement hydratées crée, par action des aluminates sur la chaux libérée par le ciment, des flocons colloïdaux au voisinage de la portlandite, puis dans le fluide. Le nombre croissant de flocons génère une rigidification de la suspension augmentant dans le temps.

Lorsque l'accélérateur est obtenu selon les deuxième, troisième et quatrième procédés, la présence de sulfates crée ici de l'ettringite, de forme aciculaire, pouvant dépasser quelques dizaines de microns. Ces aiguillettes, dont le nombre et la taille augmentent dans le temps créent une charpente dans le fluide qui interagit sur les particules de ciment et crée une rigidification croissante.

La caractérisation rhéologique d'un fluide ou d'une suspension est basée sur les principaux paramètres suivants :

Tout d'abord, la viscosité cinématique caractérise l'état de fluidité du matériau en mouvement. Soumis à un déplacement, qui peut être une vitesse de rotation ou un gradient de vitesse, le matériau répond à ces sollicitations en créant des efforts de cisaillement.

Ensuite, le seuil d'écoulement, encore appelé seuil de rigidité ou seuil de liquidité, représente la limite de contrainte jusqu'à laquelle le fluide a un comportement solide. Tant que le fluide n'est pas soumis à une certaine contrainte ou une certaine pression, il n'apparaît aucun déplacement. Cette contrainte maximale de solidité caractérise la stabilité d'une suspension : il n'y aura plus sédimentation des particules lorsque les contraintes dues à la chute des grains par leur poids seront inférieures à ce seuil d'écoulement.

Les coulis de l'invention entrent dans une plage rhéologique de l'ordre de mille fois moindre que celle des mortiers et bétons et se rapprochent plutôt de celle de l'eau (1 mPa.s à 20°C) :

Ils possèdent une viscosité cinématique d'environ 1,5 mPa.s à environ 50 mPa.s et de l'ordre d'environ 2 à

environ 5 mPa.s pendant la durée pratique d'injectabilité qui est comprise entre environ 1 et environ 2 heures.

Ils possèdent également un seuil d'écoulement progressif du fait de l'accélérateur, variant d'environ 0 à environ 1 Pascal pendant la même durée pratique d'injectabilité, jusqu'à environ 2 ou environ 5 Pa au moment de la rigidité, où l'on note l'arrêt de la sédimentation et le non "décrochement" du coulis placé dans une éprouvette renversée. A ce moment précis, est mesuré le temps de gélification, qui n'a pas le sens du temps de prise communément mesuré à l'aiguille de Vicat sur les mortiers et bétons. La prise réele n'intervient qu'ultérieurement, de l'ordre de 2 à 3 fois le temps de gélification.

La mesure de ces paramètres se fait grâce aux viscosimètres ou aux rhéomètres.

Ainsi, les coulis selon l'invention ont un comportement liquide et ont tendance à se répandre en forme de flaque sur le sol alors que les mortiers et bétons accélérés conventionnellement utilisés ont un comportement plastique qui ne sera visible que par un affaissement limité d'un tronc de cône.

L'invention concerne également un procédé d'étanchéification et/ou de consolidation de sols et de matériaux de construction caractérisé en ce qu'il consiste à injecter un coulis d'injection conforme à l'invention.

L'invention concerne encore un procédé de traitement des sols pollués, caractérisé en ce qu'on utilise, pour piéger en masse les éléments polluants, un coulis conforme à l'invention.

L'invention sera maintenant décrite à l'aide d'exemples donnés à titre indicatif et non limitatif.

EXEMPLE I

Pour étancher et consolider un sable fin, on prépare un coulis de la manière suivante :

500 litres d'une suspension primaire dosée à 540 $kg/m^3$ de ciment ultrafin de laitier au clinker avec 4 % de défloculant sont mélangés à 500 litres d'accélérateur obtenu selon le premier procédé décrit ci-dessus. La durée pratique d'injectabilité est de 1 heure (injection d'une colonne de 1 m de sable de Fontainebleau à 1 bar de pression) et le temps de gélification est de 3 heures. Le coulis est homogène et la décantation à une heure est inférieure à 10 %.

EXEMPLE II

Les conditions de préparation sont identiques à celles de l'exemple I mais les rapports sont modifiés :

400 litres d'une suspension primaire dosée à 500 $kg/m^3$ de ciment ultrafin de laitier au clinker avec 4 % de défloculant sont mélangés à 600 litres d'accélérateur obtenu selon le premier procédé décrit ci-dessus. La durée pratique d'injectabilité est de 50 minutes et le temps de gélification est de 2 heures. Le coulis est homogène et la décantation à une heure est inférieure à 4 %.

EXEMPLE III

L'accélérateur est fabriqué selon le deuxième procédé décrit ci-dessus.

Le coulis est constitué de 270 $kg/m^3$ de ciment ultrafin avec 4 % de défloculant et 13,5 kg de sulfate d'aluminium (densité = 1,32) pré-dilué. La durée pratique d'injectabilité est de 1 heure et le temps de gélification est de 3 heures. Le coulis est homogène et la décantation à une heure est inférieure à 7 %.

## Revendications

1. Utilisation d'un accélérateur de gélification ne comprenant pas de silicates de soude et/ou de fumées de silice et comprenant une teneur en aluminium $Al_2O_3$ comprise entre environ 8% et environ 50% en poids par rapport au poids de matière sèche, dans un coulis d'injection comprenant une suspension aqueuse de ciment de finesse Blaine supérieure à 8 000 $cm^2/g$, pour l'étanchéification et/ou la consolidation de sols et de matériaux de construction.

2. Utilisation d'un accélérateur selon la revendication 1, **caractérisé en ce que** l'accélérateur comprend au moins un composé alumineux obtenu à partir des composés choisis parmi le groupe comprenant l'aluminate de calcium anhydre, le sulfate d'aluminium $Al_2(SO_4)_3$, $nH_2O$, l'aluminate de calcium sulfaté, le sulfate double d'aluminium et de potassium AlK $(SO_4)_2$, nH $_2O$ et le phosphate d'aluminium $AlPO_4$, $nH_2O$.

3. Utilisation d'un accélérateur selon la revendication 2, **caractérisé en ce que** l'aluminate de calcium anhydre possède un rapport $Al_2O_3/CaO$ supérieur à 0,2 et de préférence compris entre 0,8 et 1,2.

4. Utilisation d'un accélérateur selon la revendication 2, **caractérisé** en que le sulfate d'aluminium comprend 8% en

poids d'alumine.

5. Utilisation d'un accélérateur selon la revendication 2, **caractérisé en ce que** l'aluminate de calcium sulfaté est issu d'un mélange d'une solution de sulfate d'aluminium et d'un composé contenant du calcium.

6. Utilisation d'un accélérateur selon la revendication 5, **caractérisé en ce que** le composé contenant du calcium est choisi dans le groupe constitué de la chaux vive CaO, la portlandite $Ca(OH)_2$, le sulfate de calcium.

7. Coulis d'injection pour l'étanchéification et/ou la consolidation de sols et de matériaux de construction, **caractérisé en ce qu'**il utillise au moins un accélérateur de gélification selon l'une quelconque des revendications 1 à 6, comprenant une suspension aqueuse de ciment de finesse Blaine supérieure à 8000 $cm^2/g$.

8. Coulis d'injection selon la revendication 7, **caractérisé en ce qu'**il possède un seuil d'écoulement variant d'environ 0 à environ 5 Pa et n'excédant pas environ 1 Pa pendant la durée pratique d'injectabilité comprise entre environ 1 et environ 2 heures.

9. Coulis d'injection selon la revendication 7 ou 8, **caractérisé en ce qu'**il possède une viscosité cinématique d'environ 1,5 mPa.s à environ 50 mPa.s et de l'ordre d'environ 2 à environ 5 mPa.s pendant la durée pratique d'injectabilité comprise entre environ 1 et environ 2 heures.

10. Coulis d'injection selon l'une quelconque des revendications 7 à 9, **caractérisé en ce qu'**il comprend une suspension aqueuse de ciment de laitier de haut fourneau au clinker.

11. Coulis d'injection selon la revendication 10, **caractérisé en ce que** le ciment comprend plus de 50% en poids de laitier et plus de 10% en poids de clinker.

12. Coulis d'injection selon la revendication 10 ou 11, **caractérisé en ce que** le ciment comprend plus de 80% en poids de laitier, environ 16% en poids de clinker et 4% en poids de gypse.

13. Coulis d'injection selon l'une quelconque des revendications 10 à 12, **caractérisé en ce que** le ciment de laitier a une granulométrie comprise entre environ 0,5 µm et environ 15 µm.

14. Coulis d'injection selon l'une quelconque des revendications 10 à 13, **caractérisé en ce qu'**il comprend d'environ 50 à environ 350 kg de ciment par mètre cube de coulis.

15. Coulis d'injection selon l'une quelconque des revendications 7 à 14, **caractérisé en ce qu'**il comprend jusqu'à environ 800 litres, et de préférence entre environ 500 et environ 600 litres d'accélérateur de gélification par mètre cube de coulis lorsque l'accélérateur est obtenu à partir d'aluminate de calcium ou à partir d'aluminate de calcium sulfaté.

16. Coulis d'injection selon l'une quelconque des revendications 7 à 14, **caractérisé en ce qu'**il comprend une quantité d'accélérateur de gélification allant jusqu'à environ 15%, et de préférence entre environ 5 et environ 7% en poids par rapport au poids de ciment lorsque l'accélérateur est obtenu à partir de sulfate d'aluminium ou à partir de sulfate double d'aluminium et de potassium.

17. Coulis d'injection selon l'une quelconque des revendications 7 à 16, **caractérisé en ce qu'**il comprend jusqu'à environ 500 kg d'une charge de carbonate de calcium et/ou de dolomite par mètre cube de coulis.

18. Coulis d'injection selon l'une des revendications 7 à 16, **caractérisé en ce qu'**il comprend un agent superplastifiant et défloculant dans une quantité comprise entre environ 1 et environ 4% en poids par rapport au poids de matière sèche en suspension.

19. Procédé d'étanchéification et/ou de consolidation de sols et de matériaux de construction, **caractérisé en ce qu'**il consiste à injecter un coulis d'injection conforme à l'une des revendications 7 à 18.

20. Procédé de traitement des sols pollués, **caractérisé en ce qu'**on utilise, pour piéger en masse les éléments polluants, un coulis conforme à l'une des revendications 7 à 18.

## Claims

1. The use of a gelling accelerator not comprising any soda silicates and/or fumes of silica and comprising an aluminium $Al_2O_3$ content of between approximately 8% and approximately 50% by weight with respect to the weight of dry matter, in an injection slurry comprising an aqueous suspension of cement with a Blaine fineness greater than 8000 $cm^2/g$, for sealing and/or consolidating ground and construction materials.

2. The use of an accelerator according to Claim 1, **characterised in that** the accelerator comprises at least one aluminous compound obtained from compounds chosen from amongst the group comprising anhydrous calcium aluminate, aluminium sulphate $Al_2(SO_4)_3,nH_2O$, sulphated calcium aluminate, double sulphate of aluminium and potassium $AlK(SO_4)_2,nH_2O$ and aluminium phosphate $AlPO_4,nH_2O$.

3. The use of an accelerator according to Claim 2, **characterised in that** the anhydrous calcium aluminate has an $Al_2O_3/CaO$ ratio greater than 0.2 and preferably between 0.8 and 1.2.

4. The use of an accelerator according to Claim 2, **characterised in that** the aluminium sulphate comprises 8% by weight alumina.

5. The use of an accelerator according to Claim 2, **characterised in that** the sulphated calcium aluminate results from a mixture of a solution of aluminium sulphate and a compound containing calcium.

6. The use of an accelerator according to Claim 5, **characterised in that** the compound containing calcium is chosen from the group consisting of quick lime CaO, portlandite $Ca(OH)_2$ and calcium sulphate.

7. An injection slurry for sealing and/or consolidating ground and construction materials, **characterised in that** it uses at least one gelling accelerator according to any one of Claims 1 to 6, comprising an aqueous suspension of cement with a Blaine fineness greater than 8000 $cm^2/g$.

8. An injection slurry according to Claim 7, **characterised in that** it has a threshold of flow varying from approximately 0 to approximately 5Pa and not exceeding approximately 1 Pa during the practical period of injectability of between approximately 1 and approximately 2 hours.

9. An injection slurry according to Claim 7 or 8, **characterised in that** it has a kinematic viscosity from approximately 1.5 mPa.s to approximately 50 mPa.s and of the order of approximately 2 to approximately 5 mPa.s during the practical period of injectability of between approximately 1 and approximately 2 hours.

10. An injection slurry according to any one of Claims 7 to 9, **characterised in that** it comprises an aqueous suspension of blast furnace slag cement with clinker.

11. An injection slurry according to Claim 10, **characterised in that** the cement comprises more than 50% by weight slag and more than 10% by weight clinker.

12. An injection slurry according to Claim 10 or 11, **characterised in that** the cement comprises more than 80% by weight slag, approximately 16% by weight clinker and 4% by weight gypsum.

13. An injection slurry according to any one of Claims 10 to 12, **characterised in that** the slag cement has a granulometry of between approximately 0.5 $\mu m$ and approximately 15 $\mu m$.

14. An injection slurry according to any one of Claims 10 to 13, **characterised in that** it comprises 50 to approximately 350 kg of cement per cubic metre of slurry.

15. An injection slurry according to any one of Claims 7 to 14, **characterised in that** it comprises up to approximately 800 litres and preferably between approximately 500 and approximately 600 litres of gelling accelerator per cubic metre of slurry when the accelerator is obtained from calcium aluminate or from sulphated calcium aluminate.

16. An injection slurry according to any one of Claims 7 to 14, **characterised in that** it comprises a quantity of gelling accelerator ranging up to approximately 15%, and preferably between approximately 5% and approximately 7% by weight with respect to the weight of cement when the accelerator is obtained from aluminium sulphate or from

double sulphate of aluminium and potassium.

17. An injection slurry according to any one of Claims 7 to 16, **characterised in that** it comprises up to approximately 500 kg of a filling of calcium carbonate and/or dolomite per cubic metre of slurry.

18. An injection slurry according to one of Claims 7 to 16, **characterised in that** it comprises a superplasticiser and deflocculant in a quantity of between approximately 1% and approximately 4% by weight with respect to the weight of dry matter in suspension.

19. A method for sealing and/or consolidating ground and construction materials, **characterised in that** it consists in injecting an injection slurry according to one of Claims 7 to 18.

20. A method for treating contaminated ground, **characterised in that** a slurry according to one of Claims 7 to 18 is used for trapping the contaminating elements en masse.

**Patentansprüche**

1. Benutzung eines Gelierungsbeschleunigers ohne Sodasilikate und/oder Kieselerderäuche und mit einem Aluminiumgehalt $Al_2O_3$ zwischen etwa 8 und etwa 50 Gew.-% in Bezug auf das Gewicht der Trockensubstanz in einer Einspritzmasse mit einer wässrigen Zementsuspension mit einer Blaine-Feinheit von über 8 000 $cm^2/g$ zum Abdichten und/oder Konsolidieren von Böden und Baumaterialien.

2. Benutzung eines Beschleunigers nach Anspruch 1, **dadurch gekennzeichnet, dass** der Beschleuniger mindestens eine Aluminiumverbindung enthält, die aus der Gruppe gewählt wird, die aus wasserfreiem Kalziumaluminat, Aluminiumsulfat $(Al_2(SO_4)_3$, $nH_2O$, sulfatiertem Kalziumaluminat, doppeltem Aluminiumsulfat und Kalium AIK $(SO_4)_2$, $nH_2O$ sowie Aluminiumphosphat $AIPO_4$, $nH_2O$ besteht.

3. Benutzung eines Beschleunigers nach Anspruch 2, **dadurch gekennzeichnet, dass** das wasserfreie Kalziumaluminat ein Verhältnis von $Al_2O_3/CaO$ von über 0,2 und vorzugsweise von 0,8 bis 1,2 besitzt.

4. Benutzung eines Beschleunigers nach Anspruch 2, **dadurch gekennzeichnet, dass** das Aluminiumsulfat 8 Gew.-% Aluminiumoxid umfasst.

5. Benutzung eines Beschleunigers nach Anspruch 2, **dadurch gekennzeichnet, dass** das sulfatierte Kalziumaluminat aus einer Mischung einer Aluminiumsulfatlösung und einer Kalzium enthaltenden Verbindung stammt.

6. Benutzung eines Beschleunigers nach Anspruch 5, **dadurch gekennzeichnet, dass** die Kalzium enthaltende Verbindung aus der Gruppe gewählt wird, die aus Ätzkalk CaO, Portlandit $Ca(OH)_2$, Kalziumsulfat besteht.

7. Einspritzmasse zum Verdichten und/oder Konsolidieren von Böden und Baumaterialien, **dadurch gekennzeichnet, dass** sie mindestens einen Gelierungsbeschleuniger nach einem der Ansprüche 1 bis 6 enthält, der eine wässrige Zementsuspension mit einer Blaine-Feinheit von über 8.000 $cm^2/g$ aufweist.

8. Einspritzmasse nach Anspruch 7, **dadurch gekennzeichnet, dass** sie eine Fliessgrenze zwischen etwa 0 und etwa 5 Pa, und nicht mehr als 1 Pa während der praktischen Einspritzbarkeitsdauer von etwa 1 bis etwa 2 Stunden besitzt.

9. Einspritzmasse nach Anspruch 7 oder 8, **dadurch gekennzeichnet, dass** sie eine kinematische Viskosität von etwa 1,5 mPa.s bis etwa 50 mPa.s besitzt, und von etwa 2 bis etwa 5 mPa.s während der praktischen Einspritzbarkeitsdauer von etwa 1 bis etwa 2 Stunden.

10. Einspritzmasse nach einem der Ansprüche 7 bis 9, **dadurch gekennzeichnet, dass** sie eine wässrige Zementsuspension aus Hochofenschlacke mit Klinker umfasst.

11. Einspritzmasse nach Anspruch 10, **dadurch gekennzeichnet, dass** der Zement über 50 Gew.-% Schlacke und über 10 Gew.-% Klinker umfasst.

**12.** Einspritzmasse nach Anspruch 10 oder 11, **dadurch gekennzeichnet, dass** der Zement über 80 Gew.-% Schlakke, etwa 16 Gew.-% Klinker und 4 Gew.-% Gips umfasst.

**13.** Einspritzmasse nach einem der Ansprüche 10 bis 12, **dadurch gekennzeichnet, dass** der Schlackenzement eine Korngröße von etwa 0,5 µm bis etwa 15 µm aufweist.

**14.** Einspritzmasse nach einem der Ansprüche 10 bis 13, **dadurch gekennzeichnet, dass** sie etwa 50 bis etwa 350 kg Zement pro Kubikmeter Masse umfasst.

**15.** Einspritzmasse nach einem der Ansprüche 7 bis 14, **dadurch gekennzeichnet, dass** sie bis zu etwa 800 Liter, vorzugsweise etwa 500 bis etwa 600 Liter Gelierungsbeschleuniger pro Kubikmeter Masse umfasst, wenn der Beschleuniger aus Kalziumaluminat oder aus sulfatiertem Kalziumaluminat erhalten wird.

**16.** Einspritzmasse nach einem der Ansprüche 7 bis 14, **dadurch gekennzeichnet, dass** sie eine Menge Gelierungsbeschleuniger von bis zu etwa 15%, und vorzugsweise zwischen etwa 5 und etwa 7 Gew.-% in Bezug auf das Zementgewicht umfasst, wenn der Beschleuniger aus Aluminiumsulfat oder doppeltem Aluminiumsulfat und Kalium erhalten wird.

**17.** Einspritzmasse nach einem der Ansprüche 7 bis 16, **dadurch gekennzeichnet, dass** sie bis zu etwa 500 kg einer Kalziumkarbonat- und/oder Dolomit-Charge pro Kubikmeter Masse umfasst.

**18.** Einspritzmasse nach einem der Ansprüche 7 bis 16, **dadurch gekennzeichnet, dass** sie einen Superplastifikator und ein Entflockungsmittel in einer Menge zwischen etwa 1 und etwa 4 Gew.-% in Bezug auf das Trockensubstanzgewicht in Suspension umfasst.

**19.** Dichtungs- und/oder Konsolidierungsverfahren von Böden und Baumaterialien, **dadurch gekennzeichnet, dass** es in der Einspritzung einer Einspritzmasse gemäß einem der Ansprüche 7 bis 18 besteht.

**20.** Behandlungsverfahren von verschmutzten Böden, **dadurch gekennzeichnet, dass** man eine Masse gemäß einem der Ansprüche 7 bis 18 benutzt, um die verschmutzenden Elemente in Masse einzufangen.

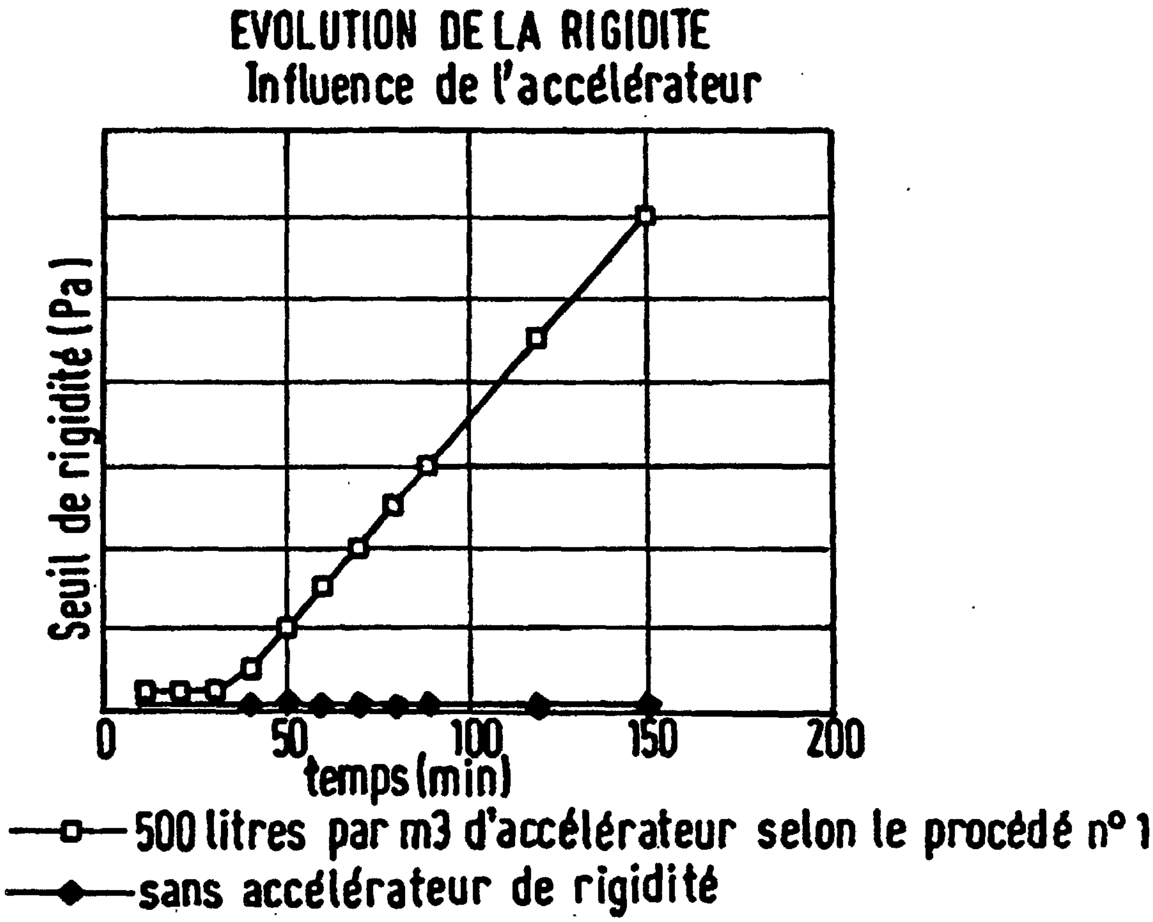
EVOLUTION DE LA RIGIDITE
Influence de l'accélérateur
Seuil de rigidité (Pa)
0
50
100
150
200
temps (min)
500 litres par m3 d'accélérateur selon le procédé n° 1
sans accélérateur de rigidité

FIG.1

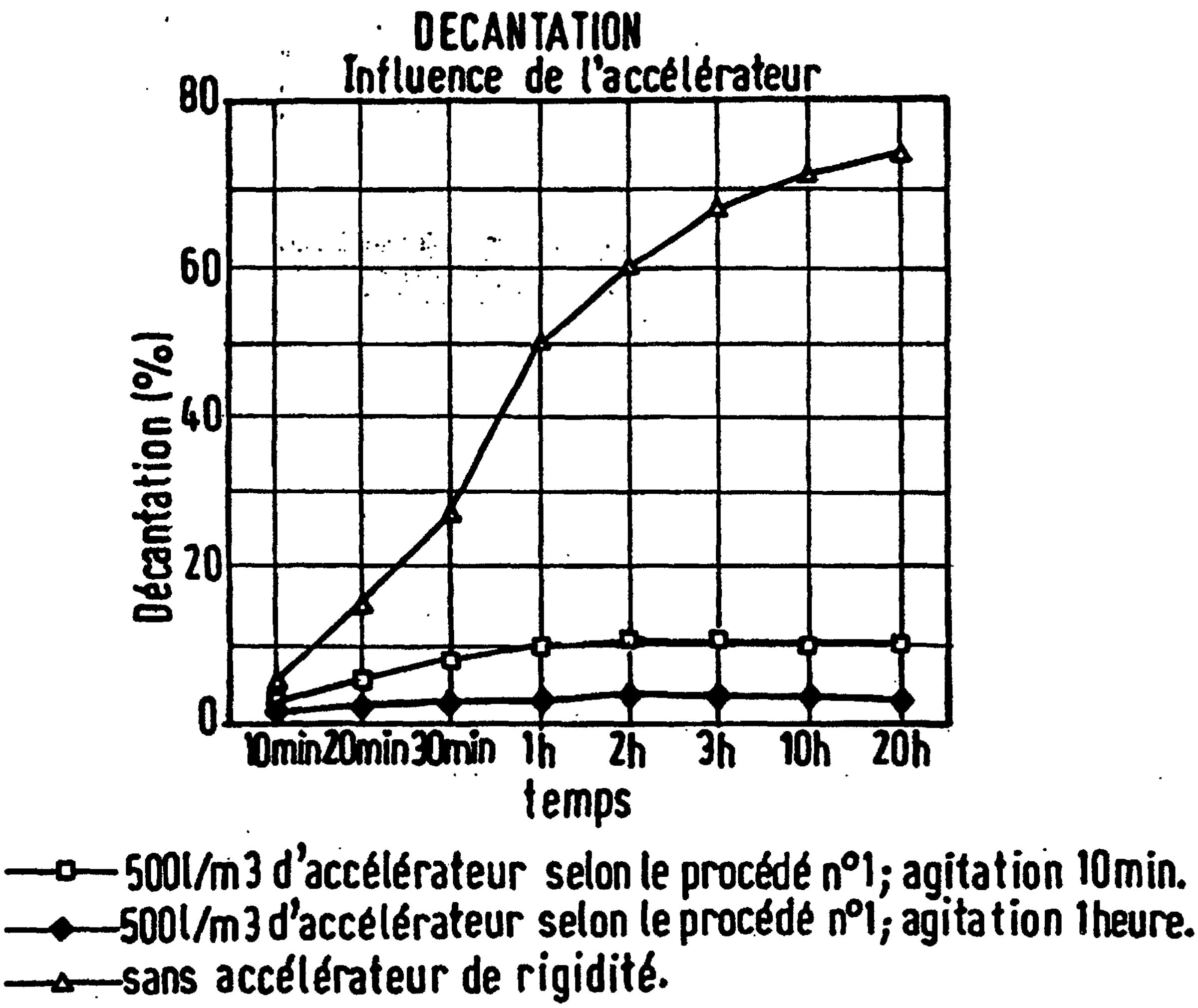
DECANTATION
Influence de l'accélérateur
80
60
40
20
0
Décantation (%)
10min
20min
30min
1h
2h
3h
10h
20h
temps
500l/m3 d'accélérateur selon le procédé n°1; agitation 10min.
500l/m3 d'accélérateur selon le procédé n°1; agitation 1heure.
sans accélérateur de rigidité.

FIG.2